**Europäisches Patentamt**

**European Patent Office**

**Office européen des brevets**

(1) Publication number: **0 328 543**
**B1**

# EUROPEAN PATENT SPECIFICATION

(45) Date of publication of patent specification: **12.12.90**

(51) Int. Cl.⁵: **F 16 K 11/02**

(21) Application number: **87907260.1**

(22) Date of filing: **28.10.87**

(86) International application number:
**PCT/SE87/00503**

(87) International publication number:
**WO 88/03240 05.05.88 Gazette 88/10**

(54) A MIXER VALVE OF THE SINGLE LEVER TYPE INCORPORATING MEANS FOR AVOIDING PRESSURE SURGES DURING THE FINAL STAGE OF LEVER MOVEMENT IN THE VALVE CLOSING DIRECTION.

(30) Priority: **29.10.86 SE 8604612**

(43) Date of publication of application:
**23.08.89 Bulletin 89/34**

(45) Publication of the grant of the patent:
**12.12.90 Bulletin 90/50**

(84) Designated Contracting States:
**AT BE CH DE FR GB IT LI LU NL**

(56) References cited:
**DE-A-3 246 350**
**SE-A-8 603 942**

(73) Proprietor: **FM MATTSSON AB**
**Box 303**
**S-792 01 Mora (SE)**

(72) Inventor: **KRANG, Henry**
**Bogghed 4467**
**S-792 00 Mora (SE)**
Inventor: **ERICSSON, Stefan**
**Klapparvägen 6**
**S-792 00 Mora (SE)**

(74) Representative: **Wennborg, Göte et al**
**KRANSELL & WENNBORG AB Sandhamnsgatan 42**
**S-115 28 Stockholm (SE)**

Courier Press, Leamington Spa, England.

## Description

Field of Invention

The present invention relates to single lever type mixer valves.

An example of single lever valves is found described in SE—B—432 651 (F. M. Mattsson (= US—A—4 375 225).

This known valve is provided, inter alia, with an adjustable stop member which is intended to limit rotary movement of a dogging device in a direction in which the supply of hot water through the valve increases, and an abutment member which restricts the extent to which the lever can be lifted, thereby enabling the output of water through the valve to be regulated. This enables the mixer valve to be adjusted fully, without needing to dismantle the valve.

The flow control unit is located at the top of the mixer valve and is covered by a cap and a cover plate. The lever, with cover plate, need not be permanent fixtures of the flow control unit, but may be stored separately and may be fitted and replaced independently of each other.

The actual core of the flow control unit, i.e. the valve plates which incorporate the throughflow ports and which can be rotated and displaced linearly relative to one another, is preferably made of ceramic material, such that the valve will deliver the precise flow for which the valve is adjusted, over an almost unlimited period of use.

Those parts of the flow control unit which are responsible for encapsulation and guidance of the valve plates are preferably made of a thermoplastic material.

Resilient seating seals, capable of permitting sprung movement of up to 1 mm, are conveniently provided at the bottom of the flow control unit, such as to seal the unit effectively against opposing surfaces of the housing fitting.

Background Prior Art

One drawback with mixer valves of the kind described is that harmful pressure surges are liable to occur in the feed pipes when closing the valve, especially when, as is often the case, the valve is closed by simply striking the lever with the palm of the hand.

Measurements have shown that these pressure surges subject the feed pipes of the water supply system to very high loads, from which it will be understood that repeated pressure surges may easily lead to serious damage of the pipes, or may even cause the pipes to burst in time. This risk is particularly high in the case of water supply systems to which a large number of such mixer valves are fitted. The possibility can not be excluded that several pressure surges will be generated in one and the same water supply system or network when several of the valves incorporated therein are in use at one and the same time, and that the forces exerted by these surges will be superimposed upon each other. In order to safeguard against the risk of damage due to such causes, the pipes and pipe system as a whole must be of more robust construction than otherwise necessary, which greatly increases the costs of such systems.

DE—A—3 246 350 (Hansa Metallwerke) describes a mixer valve of the kind recited in the preamble of claim 1.

DE—A—3 534 692 (Hansa Metallwerke), being published on 16 April 1987, describes a similar valve, which is constructed such that when the valve lever is struck harshly in the valve closing direction, pressure is built up in part of the valve and the final phase of the valve closing movement of the lever takes place against a higher resistance, which requires the exertion of a greater closing force and which extends the duration of the valve closing phase. The valve is also constructed so as to exclude this build up of pressure when the valve lever is moved gently in the valve closing direction, so that the lever can be moved when needing to overcome an additional resistance.

Incorporated in the known valve is a plunger which is arranged to move in one direction in an auxiliary chamber such that the volume of the auxiliary chamber will increase solely as a result of the pressure of secondary water which enters the chamber when a chamber communication inlet part is exposed.

If the pressure of the water is unsatisfactory or if lime deposits or like deposits have had time to form on parts of the plunger during its use, there is a risk that the plunger will jam or bind, i.e. it cannot be sure that the plunger will move in the intended manner. When the plunger is activated by a pressure rod and is intended to move in the opposite direction when closing the valve, there is a certain amount of dead movement, since the pressure rod does not initially lie against the valve part concerned.

The extent of this dead movement will, of course, increase should the plunger stick or bind in the auxiliary chamber, thereby preventing the chamber from taking up the intended amount of water. This in turn will prevent the intended pressure build-up from taking place. In any event, this known valve can not be considered to be totally reliable.

The object of the present invention is to provide a mixer valve which has none of the aforementioned serious drawbacks.

Other types of valves are known to the art which are constructed, in one way or another, to reduce the occurrence of pressure surges when closing the valve, therewith to extend the useful life of the valve. Examples of such valves are found in GB—A—2 160 950 (Agnew et al) and EP—A—81302496 (Publication No 43 188, Neles). However, the risk that pressure surges will occur when closing valves of the kind described in these publications is not as pronounced as that in a mixer valve of the single lever type.

Brief Description of the Drawing

The inventive mixer valve is of the kind set forth in the preamble of claim 1 and is mainly characterized in that the main body of the valve plate dogging or driving device is connected with the valve plunger such that the plunger is immovable in relation to said main body when the actuator is displaced linearly in either directions.

The inventive valve construction is such as to ensure that the volumetric capacity of the auxiliary cylinder chamber is always changed when the actuator is displaced. When the lever is moved in the valve opening direction, the volumetric capacity of the chamber increases, wherewith fluid is drawn into the chamber through the fluid passage. When the actuator is moved rapidly in the opposite direction, therewith decreasing the volumetric capacity of the chamber, the fluid passage will be essentially closed, so as to restrict the inflow of fluid and to build up pressure.

The requisite pressure build-up can be readily achieved, with the provision of a throttling device of this kind which moves in the chamber under the influence of the fluid therein. The throttling device may also be designed so that it will not close the fluid passage when the lever is moved carefully or gently. Instead, fluid may flow from the chamber via the passageway in not inconsiderable quantities, this fluid passing to one side of the throttling device. This is possible provided that the throttling device is not pressed against the passage orifice.

In accordance with one embodiment of the invention, the throttling device includes a throttling plate which incorporates a fine channel and which is guided for movement in the chamber under the influence of fluid flow between a position in which fluid can flow freely into and out of the chamber through the fluid passage and a throttling position in which the plate covers the passage and fluid can flow solely through the fine channel in said plate.

The fine channel preferably extends radially outwards in the throttling plate and exits at the periphery thereof, and enables the desired pressure build-up to be achieved in a particularly simple manner. In order to enable the valve lever to be moved to its valve closure position when closing the valve rapidly, it is necessary for a large amount of fluid to be forced through this fine channel during the actual final stage of movement. This results in a marked increase in fluid pressure in the chamber, and it is not possible to move the lever to its fully closing position without applying additional force in this final closing stage. This additional force is not normally applied when the lever is simply struck in order to close the valve. In this latter case the greatest force is instead applied to the valve lever when first striking the lever, i.e. at the initial closing stage.

In principle it is possible within the scope of the invention, to use different arrangements for effecting the flow of fluid to and from the chamber.

In the case of one such device the fluid supplied to the chamber through the fluid passage is water delivered to the valve.

In this case, water is drawn into the mixing chamber through a channel located in the actuator part of the valve as the valve is opened and the volumetric capacity of the chamber subsequently increases.

In the case of another arrangement, which is in principle different to the former, the chamber is sealed off from the water to the mixing chamber and accommodates a separate fluid, e.g. air, oil or secondary water. In this embodiment the passage extends through the plunger part to a further chamber on the opposite side of the plunger, such that the volume of one chamber decreases and the volume of the other chamber increases in response to movement of said actuator part.

Thus, in this case, the two chambers and the fluid, e.g. air, by means of which pressure is built up during the final valve closing stage, form a separate, closed system which is isolated from the water in the actual mixer valve.

In the case of a third arrangement, in principle different to the other two, the fluid used to establish a pressure build-up in the value when the value is closed rapidly is air. The inventive mixer valve which incorporates this particular arrangement is characterized in that the chamber communicates with air-filled space in the valve through a channel in the plunger part of the valve.

According to one such embodiment in which a secondary fluid is fed to the auxiliary chamber, the throttling device is guided centrally on a pin or stud which projects out from the plunger part of the valve and which is provided with an abutment means for restricting movement of the throttling device in the valve opening direction, the passage in this case having an annular configuration with an internal diameter which exceeds the outer diameter of the pin.

In the case of this embodiment, the throttling device, e.g. the throttling plate, is provided with a centrally located hole and is fitted onto the pin or stud. The annular passage ensures that the pressure exerted on the throttling device during its movement from respective abutments towards the passage orifice is both symmetricaly and uniform.

The throttling plate guide means has the form of an element having two or more peripherally and axially extending tongues whose outer diameters correspond to the inner diameter of the auxiliary chamber. The throttling plate is mounted between the tongues of the guide element in a manner to leave between the tongues an open passage through which fluid can flow and act on the throttling plate.

In addition to an actual throttling device in the form of a throttling plate, the valve may include a separate, tongued element which is operative in guiding the throttling plate for movement in the auxiliary chamber. This further tongues element is preferably immovable in the auxiliary chamber and ensures that the throttling plate is not skewed or twisted so as to jeopardize the intended function of the auxiliary chamber and thus also the valve.

The further tongued element may also be provided with a centrally located hole which will assist in ensuring that the throttling plate is pressed reliably against the chamber wall incorporating the passage orifice, in the final stage of a rapid valve closing movement.

Brief Description of the Drawings

The invention will now be described in more detail with reference to a number of exemplifying embodiments thereof and with reference to the accompanying schematic drawings, in which

Figure 1 is a partially cut-away side view of an inventive mixer valve of the single lever kind;

Figure 2 is a sectional view of part of the valve in larger scale, with the lever in its valve open position;

Figure 3 is a perspective view of a throttling plate and an associated guide means which form an embodiment of a throttling device for the valve according to this invention;

Figure 4 is an enlarged sectional view which corresponds to Figure 2 and which illustrates the position taken by the throttling device towards the end of a valve closing operation effected by striking the valve lever;

Figure 5 is a cross-sectional view of part of an inventive mixer valve of different construction, said valve being shown in an open position;

Figure 6 is a cross-sectional view of the mixer valve of Figure 5 and illustrates the valve in the final stage of a rapid valve-closure movement;

Figure 7 illustrates in cross-section part of a further embodiment of a throttling device for use with the inventive valve, the throttling device being shown in an open position and the pressure generating secondary fluid of this embodiment being air taken from the valve; and

Figure 8 is a view similar to Figure 7 and illustrates the throttling device upon completion of a rapid valve-closure operation.

A Description of Preferred Embodiments

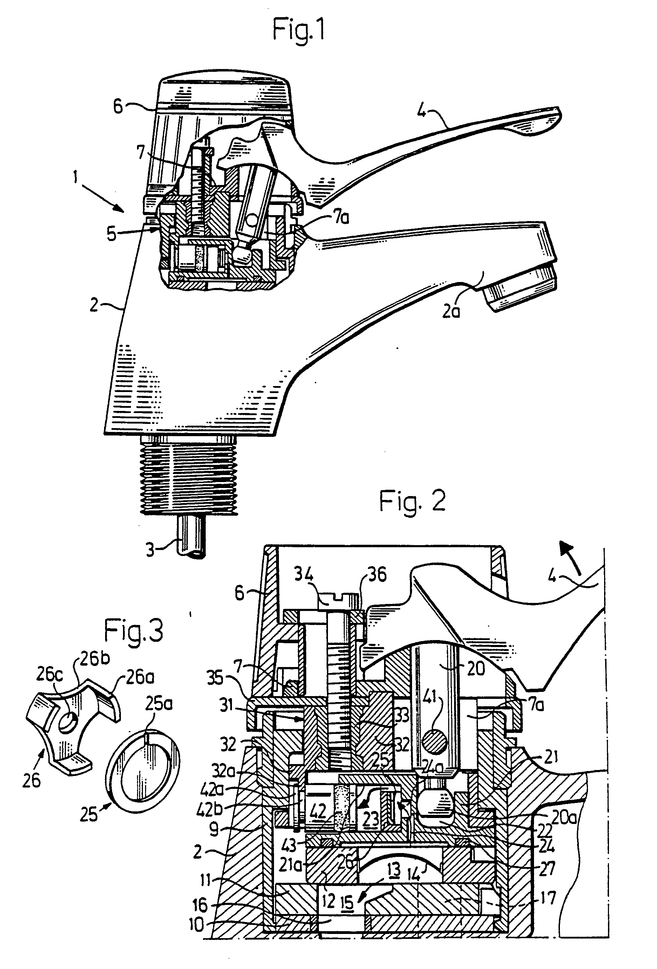

The mixer valve 1 of all the illustrative embodiments comprises a valve housing 2 which incorporates a tap nozzle 2a and mutually parallel inlet pipes for hot and cold water, although only the hot water pipe 3 is shown in Figure 1.

Arranged in the central part of the valve housing 2 is a flow control unit 5 which is activated by the single lever 4 of the mixer valve and which will be described in greater detail hereinafter. The flow control unit is protected by a top cap 6 and a cover plate 7, which shield the unit from the ingress of water and contaminants liable to disturb the function of the flow control unit. The lever 4 with the cover plate 7 can be removed and replaced independently of the flow control unit 5.

The flow control unit 5 is embraced by an essentially cylindrical valve sleeve 9 made of thermoplastic material. The valve sleeve has a bottom 10 which carries a stationary valve plate 11 which co-acts with a rotatable and displaceable valve plate 12. The two valve plates 11 and 12 are made of a ceramic material.

The valve plate 11 is provided with a cold water inlet opening and a hot water inlet opening (not shown) which communicate with respective cold and hot water inlet channels. The cold water inlet channel is referenced 17 in Figure 2.

The movable valve plate 12 is so arranged that when rotated the undersurface thereof, which is in abutment with the upper surface of the stationary valve plate 11, will cover more of one inlet opening that the other. Rotation of the valve plate in one direction will result in the supply of a greater amount of hot water through the hot water inlet opening to an elongated bore 13 located centrally of the valve plate than the amount of cold water supplied through the cold water inlet opening. This relationship is reversed when the valve plate is turned in the other direction. The bore 13 in the valve plate 12 is fitted with a filter or sieve 14.

The water flows through a hole 15 in the stationary valve plate 11 and a hole 16 located in the bottom 10 of the valve sleeve in register with the hole 15, into a mixing chamber (not shown) in the valve housing 2, and from there to the discharge orifice of the tap spout 2a.

The movable valve plate 12 is also displaceably mounted, so as to enable the amount of water delivered by the tap to be controlled. When the valve plate is displaced in one direction, the respective areas of the two inlet openings are increased proportionally by equal amounts and the temperature of the water discharged is therefore not changed. Conversely, linear displacement of the valve 12 in the other direction results in a proportional decrease in the areas of respective inlet openings, such that the amount of water discharged is decreased without changing the temperature of the water.

The rotatable and linearly displaceable valve plate 12 is moved through the medium of a dogging device 31 which is provided with an actuator 21 and which is operated by means of a drive arm 20 on the valve lever 4.

The drive arm 20 is pivotally mounted in bifurcate projections 7a which extend downwardly from the cover plate 7 on both sides of the drive arm. The bifurcate projections engage in corresponding recesses in the main body of the dogging device 31, which main body includes a sleeve-like element 32 which can be rotated in the valve sleeve 9 between stop abutments not shown.

The sleeve-like element 32 has provided therein a screw-threaded bush 33 which receives a screw 34, one purpose of which is to secure the setting of an anti-scolding device which comprises, inter alia, a plate 35, and which enables the amount of hot water delivered through the valve to be adjusted. Another purpose of the screw 34 is to enable adjustments to be made to the setting of a flow restricting plate 36 which controls vertical movement of the lever 4 and therewith also the total amount of water which can be discharged from the valve.

Since the components whose settings can be adjusted by means of the screw 34 form no part of the present invention they will not be described in detail here.

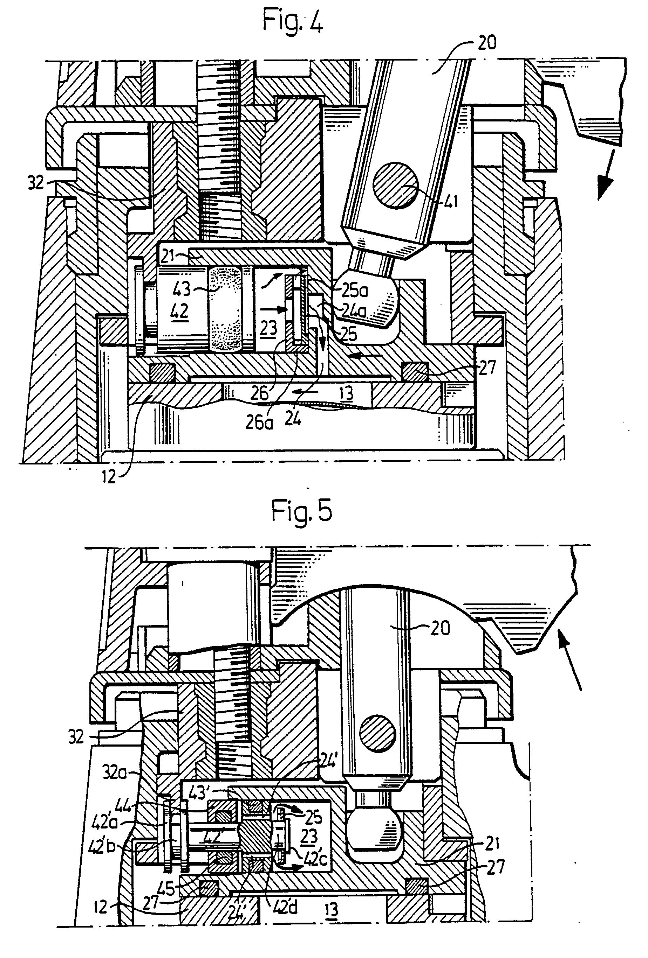

The actuator 21 of the dogging device 31 is rotatable together with the dogging device to any selected angle and can be displaced linearly between two terminal positions, as shown in Figures 2 and 4 respectively.

This linear displacement of the actuator 21 is effected through the drive arm 20 which is connected to the lever 4 and the end 20a of which is part-spherical in shape and fits into a recess 22 in the actuator 21.

The actuator terminal position illustrated in Figure 2 corresponds to the position of the actuator when the valve is fully open, whereas Figure 4 illustrates the position of the actuator when the lever is moved to its valve closing position by being struck sharply or roughly, as explained in more detail hereinafter.

In the embodiments illustrated in Figures 1—4, the actuator 21 presents an open-ended cylindrical surface 21a which defines a cylindrical, auxiliary chamber 23. Arranged in the auxiliary chamber is a plunger 42 which has fitted thereon a seal 43 and which has on one end thereof a flange 42a which defines inwardly a groove 42b. The groove 42b is in engagement with a projection 32a on the dogging device 32, this projection coupling the plunger 42 to the dogging device 32 such as to pivotally connect said components together and to the actuator 21 but to remain stationary in relation to the actuator when said actuator is displaced linearly. Linear displacement of the actuator results in a change in volume of the cylindrical chamber 23, which communicates through a passageway or channel 24 with the bore 13 in the movable valve plate 12.

When the actuator 21 is moved to the position illustrated in Figure 2, which corresponds to upward movement of the lever 4 to the valve opening position, the volumetric capacity of the cylindrical chamber 23 will change, causing water present in the bore 13 to be drawn into the chamber 23, as illustrated by arrows in Figure 2.

Also arranged in the cylindrical chamber 23 is a throttling plate 25 which has a fine channel 25a provided therein. The throttling plate 25 is encircled by a guide means, which comprises a guide element 26 which is secured in the chamber and which is provided with three peripherally and axially extending tongues 26a which embrace the throttling plate 25. The portions of the guide element located between the tongues 26a have a concave, arcuate shape 26b which permit water to pass the guide element. The guide element is also provided with a central hole 26c, which also permits water to pass through the guide element.

The actuator 21 is sealed against the valve plate 12 by means of seals 27. The passageway or channel 24 of the actuator 21 communicates with the bore 13 in the valve plate and widens into a centrally located, cylindrical orifice 24a.

When the actuator is moved to the Figure 2 position, such that water is drawn into the cylindrical chamber 23 via the passageways 24, 24a, the throttling plate 25 will be displaced linearly in the surrounding guide element 26 to the position illustrated in Figure 2, in which water can be freely drawn into the chamber 23.

When the valve is then closed by applying a careful closing force, water is able to pass the guide element 26 and the throttling plate 25 and exit through the passageway 24, via the widened part 24a thereof. In this case, the throttling plate 25 has no significant effect on the valve closing action.

If, however, the valve is closed by striking down on the valve lever 4, as illustrated in Figure 4, the volume of the chamber 23 will be reduced and the throttling plate 25 encircled by the guide element 26 will be urged rapidly into sealing contact with the orifice 24a of the passageway provided in the end wall of the chamber 23, thereby sealing off the passageway. The water present in the chamber can now only exit through the fine channel 25a in the throttling plate. The pressure in the chamber 23 will consequently rise very quickly and it becomes impossible to force the lever 4 to its terminal valve closing position without exerting a comparatively large, additional force on the lever in the final valve closing stage.

This build-up of pressure in the chamber 23 ensures that no valve impacts will occur in the valve delivery pipes.

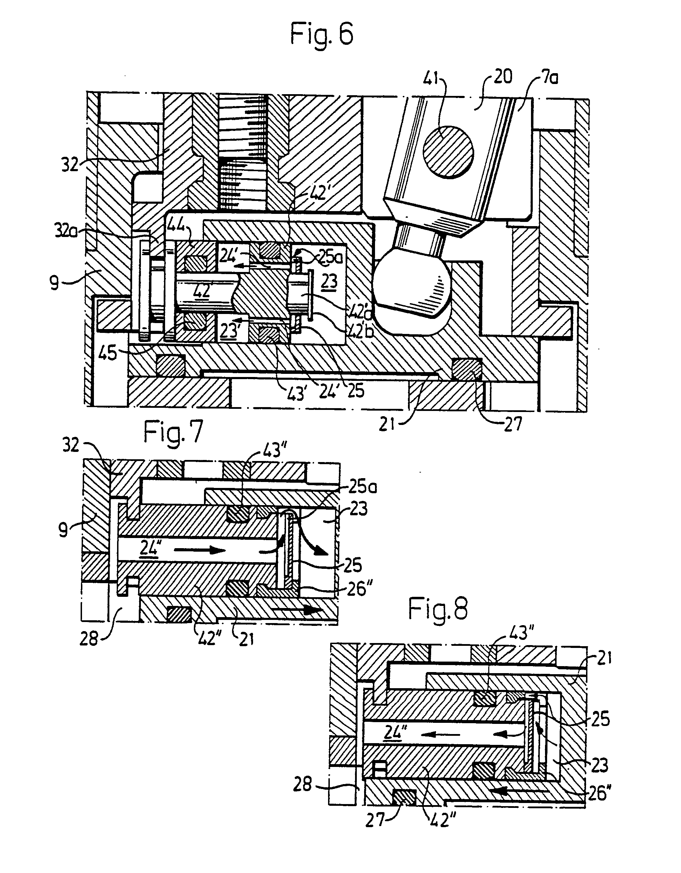

Figures 5 and 6 illustrate a modified embodiment in which the cylindrical, auxiliary chamber 23 is sealed against the ingress of water delivered to the mixing chamber. In the case of this embodiment the medium used to build up pressure in the final stage of a valve closing operation is a separate fluid, e.g. air, oil or secondary water.

The plunger of this embodiment is referenced 42' and, similar to the plunger of the aforedescribed embodiment, is immovably connected at one end to the dogging device 32, through the medium of two flanges 42'a and 42'b. The other end of the plunger is located in the chamber 23 and is provided with a stop abutment 42'c for the throttling plate 25. Furthermore, the actuator 21 of this embodiment is provided at one end thereof with a separate closure element 44 which is fitted with a seal 45 that bears against the plunger 42'.

In the embodiment of Figures 5 and 6 an annular passageway 24' extends axially through the plunger unit and exits in a further chamber 23' on the opposite side of the plunger. Consequently, movement of the actuator 21 will result in increased volume of the one chamber 23 or 23' and a decrease in the volume of the other chamber.

When the mixer valve is opened to the position illustrated in Figure 5, in which the actuator 21 is displaced as far as possible to the right in the Figure, fluid has been drawn from the chamber 23' into the chamber 23. In this valve position, the throttling plate 25 is located against the stop abutment 42'c, the throttling plate of this embodiment being guided centrally on the pin or peg 42'd extending from the plunger.

Figure 6 illustrates the positions taken by the respective valve components when the valve is closed rapidly. In this case, the throttling plate 25 is pressed against that part of the piston 42' which surrounds the annular passageway 24', wherewith pressure is built up in the chamber 23. Thus, the fluid present in the chamber 23 can only pass to the oppositely located chamber 23' through the fine-bore channel 25a in the throttling plate 25.

Figures 7 and 8 illustrate a valve embodiment in which the pressure-generating fluid used in the valve is air. As with the aforedescribed embodiments, the actuator 21 co-acts with a plunger element, here designated 42''. An annular seal 43'' seals against the actuator 21. As with the aforedescribed embodiments, the plunger 42'' is connected at one end thereof with the dogging device 32.

The plunger 42'' has extending axially therethrough a passageway 24'' which communicates with an air-containing space 28 in the mixer valve. Similar to the aforedescribed embodiments, the actuator 21 is moved to the right in Figure 7 when the valve lever is moved to its valve open position, resulting in an increase in the volume of chamber 23. Air is then drawn in to the chamber from the air space 28, through the passageway 24''. Mounted on the other end of the plunger 42'' is a guide 26'' for a throttling plate 25 of the kind illustrated in Figure 3, i.e. a throttling plate which incorporates a fine-bore channel 25a.

When the valve lever 4 is struck heavily, wherewith the actuator 21 is urged to the left to the position illustrated in Figure 8, the volume of the chamber 23 decreases and the throttling plate 25 is displaced linearly to the left, so as to seal off the passageway 24''. As with the aforedescribed embodiments, this will result in a pressure build-up in the chamber 23, therewith rendering it impossible to move the valve lever to its valve closing position without exerting additional force to the lever.

The throttling plate 25 is not pressed against the passageway orifice when the valve is closed carefully, in the intended manner, and hence the air present in the chamber 23 is able to depart through the passageway 24'', subsequent to having passed through the recesses in the guide element 26'' peripherally outside the throttling plate 25.

It has been shown in the aforegoing that pressure build-up in the chamber 23 in the actuator 21 can be achieved in principally different manners within the scope of the basic inventive concept. The plunger with which the actuator coacts has respectively different configurations. In all of the aforedescribed embodiments there is no build up of pressure in the actuator when the valve lever is moved carefully in the valve closing direction, and consequently the valve lever can be moved unimpeded to the end of its valve closing stroke.

On the other hand, if the valve lever is struck heavily or moved swiftly in some other, careless manner, pressure will build up in the actuator such as to make it impossible to move the lever to its final valve closing position without exerting additional force on the lever. This delays the closing of the valve and avoids the occurrence of valve knocks in the valve delivery pipes.

Because the main body of the dogging device is connected to the plunger, such that the plunger is immovable relative to said main body, it is always ensured that the volume of the auxiliary chamber will increase when the actuator is displaced in either direction during a valve opening movement, therewith enabling water to be drawn effectively into the chamber, the largest volume of which is always precisely defined.

It will be understood from the aforegoing that there is no dead movement in the valve, but that the volume of the auxiliary chamber is reduced from the very beginning, and that the desired pressure build-up which prevents the occurrence of pressure surges in the pipes will always be obtained when the valve is closed so rapidly that the fluid present in the chamber has insufficient time to depart through the throttled passageway of the throttling device.

The risk, for instance, of lime deposits liable to jeopardize the intended valve function does not exist with the inventive valve arrangement, since relative movement always takes place between the valve components, therewith preventing the formation of deposits in thicknesses liable to jeopardize the valve function.

**Claims**

1. A mixer valve of the single lever type in which when the valve lever (4) is struck heavily for movement in the valve closing direction pressure is built up in a valve part (21) such that the final phase of the valve closing movements of the lever takes place against a greater resistance which requires application of a greater force in order to close the valve and which thus prolongs the valve closing phase, and in which the build up of pressure is prevented when the valve lever is moved carefully in its valve closing position, such that lever movement in this case can be effected without needing to overcome a greater resistance, said mixer valve comprising

a) a valve housing (2) incorporating hot and cold water inlets;

b) two valve plates (11; 12) which are mounted in the valve housing and which incorporate throughflow ports (15; 13), of which the one valve plate (12) can be rotated and displaced linearly in relation to the other valve plate (11);

c) a valve plate dogging device (31) which is provided with an actuator (21), said dogging device being incorporated in said valve housing and activated by said valve lever (4), the arrangement being such that when the lever is swung in a vertical plane the one valve plate (12) is displaced linearly so as to adjust the flow of mixed water passing through the mixer valve, and when the lever is swung in a horizontal plane rotates said valve plate so as to change the relationship between the hot and the cold water flowing to a mixing chamber;

d) a sealed auxiliary chamber (23) which is defined in the actuator (21) which communicates with a fluid-containing space (13; 23'; 28) via a passageway (24; 24'; 24''), the volume of the chamber increasing as a result of displacement of the actuator when the lever (4) is moved in the valve opening direction, wherewith fluid is drawn into the chamber (23) through said passageway, and which auxiliary chamber has provided therein a plunger (42; 42'; 42'') which is provided with a seal (43; 43'; 43'') which seals against the actuator wall (21a) defining the auxiliary chamber (23);

characterized in that:

e) a throttling device (25) is arranged in the auxiliary chamber (23) and is intended to co-act with the plunger (42; 42'; 42'') in a manner such that when the actuator is moved rapidly in the valve closing direction, whereupon the volume of the auxiliary chamber decreases, the passageway (24; 24'; 24'') is essentially closed off so as to restrict the flow of fluid from the auxiliary chamber and therewith create a pressure build-up, and

f) the main body (32) of the dogging device (31) is connected to the plunger (42; 42'; 42'') such that the plunger is immovable in relation to said main body in either direction of displacement of the actuator (21).

2. A mixer valve according to claim 1, characterized in that the throttling device includes a throttling plate (25) which incorporates a fine-bore channel (25a) and which is guided for movement in the auxiliary chamber under the influence of the fluid flow therein, between a first position in which fluid can flow freely into and out of the auxiliary chamber through said passageway, and a throttling position in which the throttling plate (25) covers the passageway and therewith allows fluid to exit solely through the fine-bore channel (25a) in the throttling plate.

3. A mixer valve according to claim 1 or 2, characterized in that the auxiliary chamber (23) is sealed against the ingress of water delivered to the mixing chamber and accommodates a separate fluid, e.g. air, oil or secondary water, and in that the passageway (24') extends through the plunger (42') to a further auxiliary chamber (23') located on the opposite side of the plunger (42'), such that in response to movement of the actuator (21) the volume of one auxiliary chamber decreases and the volume of the other increases (Figure 5 and 6).

4. A mixer valve according to claim 1 or 2, characterized in that the auxiliary chamber (23) communicates with an air-filled space (28) in the valve, through a passageway (24'') extending through the plunger (42''). (Figures 7 and 8)

5. A mixer valve according to claim 4, characterized in that the throttling device (25) is guided centrally on a pin (42'd) which projects from the plunger (42') and which is provided with an abutment surface (42'c) for restricting movement of the throttling device in the valve opening direction, said passageway (24') being of annular configuration, having an inner diameter which exceeds the diameter of the pin.

6. A mixer valve according to claim 2, characterized in that the means for guiding the throttling plate comprises a guide element (26) which is arranged in the auxiliary chamber and which has two or more peripherally and axially extending tongues (26a; 26''a), the outer diameters of which correspond to the inner diameter of the auxiliary chamber (23), and in that the throttling plate (25) is located between said tongues, such as to permit the free passage of fluid between said tongues for activation of the throttling plate in either direction.

7. A mixer valve according to claim 6, characterized in that the tongued element (26'') is connected to the plunger (42'').

**Patentansprüche**

1. Einhebel-Mischventil, bei welchem bei einer raschen Bewegung des Ventilhebels (4) in die Schliessrichtung ein Druck in einem Ventilteil (21) aufgebaut wird, sodass in der Endphase der Hebelschliessbewegung ein grösserer Widerstand entsteht, der eine grössere Ventilschliesskraft erfordert, welcher somit die Ventilschliessphase verlängert, als wenn der Ventilhebel sorgfältig in die Ventilschliessposition gebracht wird, derart, dass die Bewegung des Ventilhebels in diesem Fall durchgeführt werden kann ohne Ueberwindung eines grösseren Widerstandes, das Mischventil enthält

a) ein Ventilgehäuse (2) mit Warm- und Kaltwasseranschlüssen

b) zwei Ventil-Platten (11; 12), die im Ventilgehäuse montiert sind und die Durchflussöffnungen (15; 13) aufweisen, wobei die eine Ventil-Platte (12) drehbar und zur anderen Ventil-Platte (11) relativ linear verschiebbar ist

c) eine Mitnehmer-Einrichtung (31) für die Ventil-Platte, die mit einem Betätigungsglied (21) versehen ist, die Mitnehmer-Einrichtung im Ventilgehäuse untergebracht ist und durch den Ventilhebel (4) betätigbar ist, wobei die Anordnung derart ist, dass wenn der Ventilhebel in einer vertikalen Ebene verstellt wird, die eine Ventilplatte (12) linear bewegt wird zur Einstellung des Durchflusses von Mischwasser, welches durch das Mischventil fliesst, und wenn der Ventilhebel in einer horizontalen Ebene bewegt wird, die Ventilplatte verdreht wird zur Veränderung des Verhältnisses zwischen dem heissen und kalten Wasser, das durch eine Mischkammer fliesst

d) eine abgedichtete Hilfskammer (23) im Betätigungsglied (21), welche mit einem Flüssigkeit enthaltenden Raum (13; 23'; 28) über eine Durchflussöffnung (24; 24'; 24'') verbunden ist, wobei sich das Volumen der Kammer vergrössert als Resultat einer Bewegung des Betätigungsgliedes wenn der Ventilhebel (4) in der Ventilöffnungsrichtung bewegt wird, wobei Flüssigkeit durch die besagte Durchflussöffnung in die Hilfskammer (23) fliesst, und die Hilfskammer einen Kolben (42; 42'; 42'') enthält, der mit einer Dichtung (43, 43', 43'') versehen ist, welche dichtend gegen die Wand des Betätigungsgliedes (21a) anliegt welche die Hilfskammer (23) begrenzt, dadurch gekennzeichnet, dass

e) eine Drosseleinrichtung (25) in der Hilfskammer (23) vorhanden ist, die bestrebt ist, mit dem Kolben (42; 42'; 42'') in der Weise zusamenzuwirken, dass wenn das Betätigungsglied rasch in Ventilschliess-Richtung bewegt wird und das Volumen der Hilfskammer sich verringert, der Durchflusskanal (24, 24', 24'') im wesentlichen geschlossen wird, sodass der Flüssigkeitsdurchfluss von der Hilfskammer vermindert wird und dadurch ein Druckaufbau erfolgt, und

f) der Hauptkörper (32) der Mitnehmereinrichtung (31) mit dem Kolben (42; 42'; 42'') in der Weise verbunden ist, dass der Kolben relativ zum Hauptkörper (32) in jeder Bewegungsrichtung des Betätigungsgliedes (21) unbeweglich ist.

2. Mischventil nach Anspruch 1, dadurch gekennzeichnet, dass die Drosseleinrichtung eine Drosselplatte (25) enthält, die einen Feinbohrungskanal (25a) enthält, die in der Hilfskammer unter dem Einfluss des Flüssigkeitsdurchflusses bei ihrer Bewegung geführt ist zwischen einer ersten Position, in welcher Flüssigkeit frei in und aus der Hilfskammer über den besagten Durchflusskanal fliessen kann und einer Drosselposition, in welcher die Drosselplatte (25) den Durchflusskanaql überdeckt und somit ein Auslass von Flüssigkeit nur über den Feinbohrungskanal (25a) zur Drosselplatte möglich ist.

3. Mischventil nach Anspruch 1 oder 2, dadurch gekennzeichnet, dass die Hilfskammer (23) gegen den Eintritt von Wasser aus der Mischkammer abgedichtet ist und ein separates Fluid, beispielsweise Luft, Oel oder zweites Wasser enthält und dass sich der Durchflusskanal (24') durch den Kolben (42') hindurch zu einer weiteren Hilfskammer (23') auf der anderen Kolbenseite (42') erstreckt, sodass sich das Volumen der einen Hilfskammer bei Betätigung des Betätigungsgliedes (21) vermindert und das Volumen der anderen vergrössert (Fig. 5 und 6).

4. Mischventil nach Anspruch 1 oder 2, dadurch gekennzeichnet, dass die Hilfskammer (23) mit einem luftgefüllten Zwischenraum (28) im Ventil über einen Durchflusskanal (24'') kommuniziert, welcher sich durch den Kolben (42'') hindurch erstreckt (Fig. 5 und 6).

5. Mischventil nach Anspruch 4, dadurch gekennzeichnet, dass die Drosseleinrichtung (25) durch einen Bolzen (42'd) geführt und zentriert ist, welcher über den Kolben (42') vorsteht und der mit einer Anschlagfläche (42'c) versehen ist zur Begrenzung der Bewegung der Drosseleinheit in Ventilöffnungsrichtung, der besagte Durchflusskanal (24') eine ringförmige Gestalt mit einem Innendurchmesser hat, der den Durchmesser des Bolzens übersteigt.

6. Mischventil nach Anspruch 2, dadurch gekennzeichnet, dass die Mittel zur Führung der Drosselplatte ein Führungsorgan (26) enthalten, welches sich in der Hilfskammer befindet und das mindestens zwei sich in peripheraler und axialer Richtung erstreckende Zungen (26a; 26''a) enthält, deren Aussendurchmesser mit dem Innendurchmesser der Hilfskammer (23) korrespondiert, und dass die Drosselplatte (25) zwischen den Zungen derart angeordnet ist, dass ein freier Durchgang für die Flüssigkeit zwischen den Zungen und der Drosselplatte vorhanden ist, zur Betätigung der Drosselplatte in beiden Richtungen.

7. Mischventil nach Anspruch 6, dadurch gekennzeichnet, dass das die Zungen enthaltende Führungselement (26'') mit dem Kolben (42'') verbunden ist.

**Revendications**

1. Robinet mélangeur du type à levier simple dans lequel, lorsque le levier (4) du robinet est frappé fortement pour être déplacé dans le sens de fermeture du robinet, une pression s'accumule dans une partie (21) du robinet de façon que la phase finale des mouvements de fermeture du robinet effectués par le levier ait lieu contre une résistance plus grande qui nécessite l'application d'une plus grande force pour fermer le robinet et qui prolonge donc la phase de fermeture du robinet, et dans lequel l'accumulation de pression est empêchée lorsque le levier du robinet est amené en douceur dans sa position de fermeture du robinet, afin qu'un mouvement du levier, dans ce cas, puisse être effectué sans qu'il soit nécessaire de vaincre une plus grande résistance, ledit robinet mélangeur comprenant

a) un corps (2) de robinet présentant des entrées d'eau chaude et d'eau froide;

b) deux plaques (11; 12) de commande d'écoulement qui sont montées dans le corps du robinet et qui présentent des orifices (15; 13) d'écoulement, une première plaque (12) de commande d'écoulement pouvant être tournée et déplacée linéairement par rapport à l'autre plaque (11) de commande d'écoulement;

c) un dispositif (31) d'entraînement de plaque de commande d'écoulement qui est pourvu d'un actionneur (21), ledit dispositif d'entraînement étant incorporé dans ledit corps de robinet et étant actionné par ledit levier (4) du robinet, l'agencement étant tel que, lorsque l'on fait pivoter le levier dans un plan vertical, la première plaque (12) de commande d'écoulement est déplacée linéairement afin de régler l'écoulement d'eau mélangée passant à travers le robinet mélangeur, et lorsque l'on fait pivoter le levier dans un plan horizontal, ladite plaque de commande d'écoulement est tournée afin de modifier la proportion entre les écoulements d'eau chaude et d'eau froide vers une chambre de mélange;

d) une chambre auxiliaire étanche (23) qui est définie dans l'actionneur (21) qui communique avec un espace (13; 23'; 28) contenant un fluide par l'intermédiaire d'un passage (24; 24'; 24''), le volume de la chambre augmentant par suite d'un déplacement de l'actionneur lorsque le levier (4) est déplacé dans le sens d'ouverture du robinet, auquel cas un fluide est aspiré dans la chambre (23) en passant par ledit passage, et laquelle chambre auxiliaire renferme un plongeur (42; 42'; 42'') qui est muni d'un joint d'étanchéité (43; 43'; 43'') qui assure l'étanchéité contre la paroi (21a) de l'actionneur définissant la chambre auxiliaire (23); caractérisé en ce que:

e) un dispositif d'étranglement (25) est agencé dans la chambre auxiliaire (23) et est destiné à coopérer avec le plongeur (42; 42'; 42'') de manière que, lorsque l'actionneur est déplacé rapidement dans le sens de fermeture du robinet, à la suite de quoi le volume de la chambre auxiliaire diminue, le passage (24; 24'; 24'') soit essentiellement fermé pour restreindre l'écoulement de fluide depuis la chambre auxiliaire et engendrer ainsi une accumulation de pression, et

f) le corps principal (32) du dispositif d'entraînement (31) est relié au plongeur (42; 42'; 42'') de manière que le plongeur soit immobile par rapport audit corps principal dans chaque sens de déplacement de l'actionneur (21).

2. Robinet mélangeur selon la revendication 1, caractérisé en ce que le dispositif d'étranglement comprend une plaque (25) d'étranglement qui présente un canal (25a) de faible calibre et qui est guidée de façon à se déplacer dans la chambre auxiliaire sous l'influence de l'écoulement de fluide dans celui-ci, entre une première position dans laquelle un fluide peut entrer et sortir librement dans et de la chambre auxiliaire en s'écoulant par ledit passage, et une position d'étranglement dans laquelle la plaque (25) d'étranglement recouvre le passage et permet ainsi au fluide de sortir uniquement par le canal (25a) de faible calibre dans la plaque d'étranglement.

3. Robinet mélangeur selon la revendication 1 ou 2, caractérisé en ce que la chambre auxiliaire (23) est protégée de façon étanche contre l'entrée d'eau délivrée à la chambre de mélange et reçoit un fluide séparé, par exemple de l'air, de l'huile ou de l'eau secondaire, et en ce que le passage (24') s'étend à travers le plongeur (42') jusqu'à une autre chambre auxiliaire (23') disposée sur le côté opposé du plongeur (42'), de manière que, en réponse à un mouvement de l'actionneur (21), le volume d'une chambre auxiliaire diminue et le volume de l'autre augmente (figures 5 et 6).

4. Robinet mélangeur selon la revendication 1 ou 2, caractérisé en ce que la chambre auxiliaire (23) communique avec un espace (28) rempli d'air dans le robinet, par un passage (24'') s'étendant à travers le plongeur (42'') (figures 7 et 8).

5. Robinet mélangeur selon la revendication 4, caractérisé en ce que le dispositif (25) d'étranglement est guidé centralement sur une broche (42'd) qui fait saillie du plongeur (42') et qui est munie d'une surface de butée (42'c) destinée à limiter le mouvement du dispositif d'étranglement dans le sens d'ouverture du robinet, ledit passage (24') étant de configuration annulaire, ayant un diamètre intérieur qui dépasse le diamètre de la broche.

6. Robinet mélangeur selon la revendication 2, caractérisé en ce que les moyens destinés à guider la plaque d'étranglement comprennent un élément (26) de guidage qui est agencé dans la chambre auxiliaire et qui comporte deux ou plus de deux languettes (26a; 26''a) s'étendant circonférentiellement et axialement, dont les diamètres extérieurs correspondent au diamètre intérieur de la chambre auxiliaire (23), et en ce que la plaque d'étranglement (25) est disposée entre lesdites languettes, afin de permettre le passage libre d'un fluide entre lesdites languettes pour actionner la plaque d'étranglement dans chaque sens.

7. Robinet mélangeur selon la revendication 6, caractérisé en ce que l'élément (26'') à languettes est relié au plongeur (42'').

EP 0 328 543 B1

Fig.1

Fig. 2

Fig.3

1

Fig. 4

Fig. 5

Fig. 6

Fig. 7

Fig. 8